# EUROPÄISCHE PATENTSCHRIFT

(11) **EP 1 723 326 B1**
(45) Veröffentlichungstag und Bekanntmachung des Hinweises auf die Patenterteilung: **10.11.2010**
(21) Anmeldenummer: 05715661.4
(22) Anmeldetag: 02.03.2005
(51) Int. Cl.: F02B 37/04, F02B 37/22, F02B 37/24, F02B 67/10, F02B 39/10, F02B 33/34

(54) **VERDICHTER, BRENNKRAFTMASCHINE MIT EINEM VERDICHTER UND VERFAHREN ZUM BETRIEB EINER BRENNKRAFTMASCHINE**
COMPRESSOR, INTERNAL COMBUSTION ENGINE COMPRISING A COMPRESSOR AND METHOD FOR OPERATING AN INTERNAL COMBUSTION ENGINE
COMPRESSEUR, MOTEUR A COMBUSTION INTERNE COMPORTANT UN COMPRESSEUR ET PROCEDE DE FONCTIONNEMENT D'UN MOTEUR A COMBUSTION INTERNE

(30) Priorität: 09.03.2004 DE 102004011251
(43) Veröffentlichungstag der Anmeldung: 22.11.2006
(73) Patentinhaber: Daimler AG, 70327 Stuttgart (DE)
(72) Erfinder: FINGER, Helmut, 70771 Leinfelden-Echterdingen (DE); FLEDERSBACHER, Peter, 70619 Stuttgart (DE); LÖFFLER, Paul, 70199 Stuttgart (DE); RÖSSLER, Klaus, 70499 Stuttgart (DE); STUTE, Manfred, 73730 Esslingen (DE); SUMSER, Siegfried, 70327 Stuttgart (DE)
(74) Vertreter: JENSEN & SON
(86) Internationale Anmeldenummer: PCT/EP2005/002188
(87) Internationale Veröffentlichungsnummer: WO 2005/090763

(56) Entgegenhaltungen:
- EP-A- 1 443 189
- EP-A2- 0 522 819
- WO-A-2005/001258
- DE-A1- 10 215 779
- DE-A1- 10 221 014
- DE-A1- 10 244 536
- DE-A1- 10 252 767
- DE-A1- 10 329 019
- US-A- 4 719 758
- US-A- 4 776 167
- US-A1- 2002 116 926

## Beschreibung

Die Erfindung bezieht sich auf eine Brennkraftmaschine mit einem Verdichter und auf ein Verfahren zum Betrieb einer Brennkraftmaschine.

In der Druckschrift DE 692 19 822 T2 wird ein Turbolader für eine Brennkraftmaschine beschrieben, welcher einen Verdichter im Ansaugtrakt und eine Abgasturbine im Abgasstrang umfasst, wobei das Turbinenrad über eine Welle mit dem Verdichterrad drehfest gekoppelt ist, so dass die über die Abgase der Brennkraftmaschine erzeugte Drehbewegung des Turbinenrades auch auf das Verdichterrad übertragen wird, welches daraufhin Verbrennungsluft aus der Umgebung auf einen erhöhten Ladedruck verdichtet. Dem Abgasturbolader ist außerdem ein Elektromotor zugeordnet, über den der Lader in bestimmten Betriebsphasen zusätzlich elektrisch anzutreiben ist. Der Elektromotor umfasst einen gehäusefesten Stator sowie einen drehfest auf der Welle angeordneten Rotor im Bereich zwischen Turbinenrad und Verdichterrad.

In der Druckschrift DE 199 55 508 C1 wird ein Abgasturbolader für eine Brennkraftmaschine beschrieben, dessen Verdichter parallel zu einem axialen Verdichtereinlasskanal, in welchem das Verdichterrad drehbar gelagert ist, einen Zusatzkanal im Verdichtergehäuse aufweist, der in Höhe des Verdichterrades in den Verdichtereinlasskanal einmündet. Sowohl über den Verdichtereinlasskanal als auch über den Zusatzkanal kann dem Verdichterrad Verbrennungsluft zugeführt werden, wobei der Weg über den Zusatzkanal insbesondere in Betriebszuständen der Brennkraftmaschine mit niedriger Last und Drehzahl gewählt wird, da bei dem in diesen Betriebszuständen herrschenden Unterdruck im Bereich der Zylindereinlässe der Brennkraftmaschine ein Druckabfall über dem Verdichter herrscht, welcher eine Strömung über den Zusatzkanal und das Verdichterrad auch ohne externen Antrieb des Verdichterrades ermöglicht. Die über den Zusatzkanal zugeführte Verbrennungsluft trifft radial auf die Verdichterradschaufeln und versetzt diesen einen antreibenden Drall. Bei niedrigen Lasten und Drehzahlen kann somit der Verdichter nach Art einer Turbine betrieben werden (so genannter Kaltluft-Turbinenbetrieb). Diese Betriebsweise ermöglicht es, in allen Betriebszuständen der Brennkraftmaschinen ein Mindestdrehzahlniveau des Abgasturboladers aufrechtzuerhalten.

Aus der DE 102 21 014 A1 ist eine aufgeladene Brennkraftmaschine mit einem Abgasturbolader sowie einem zusätzlichen Kompressor im Ansaugtrakt bekannt. Der Verdichter des Abgasturboladers weist einen parallel zum Verdichtereinlasskanal verlaufenden Zusatzkanal im Verdichtergehäuse auf, der in Höhe der Verdichterradschaufeln in den Verdichtereinlasskanal einmündet. Über ein Stellglied kann die Luftzufuhr axial über den Verdichtereinlasskanal auf das Verdichterrad sowie radial über den Zusatzkanal auf die Verdichterradschaufeln eingestellt werden. Über einen Elektromotor kann die Welle des Abgasturboladers auch direkt angetrieben werden.

Der Erfindung liegt das Problem zugrunde, mit geringem Energieaufwand die Verdichterraddrehzahl auf einem Mindestniveau zu halten. Insbesondere bei Verwendung eines Verdichters in einer Brennkraftmaschine soll zum einen sichergestellt werden, dass im Leerlauf und im unteren Teillastbereich der Brennkraftmaschine eine Mindestdrehzahl des Verdichters aufrechterhalten und zum anderen bei einer Beschleunigung des Motors Ladeluft mit geringst möglicher Zeitverzögerung zur Verfügung gestellt wird.

Dieses Problem wird bei einer Brennkraftmaschine mit den Merkmalen des Anspruches 1 und bei einem Verfahren zum Betrieb einer Brennkraftmaschine mit den Merkmalen des Anspruches 11 gelöst.

Der erfindungsgemäße Verdichter, welcher sich insbesondere für eine Brennkraftmaschine eignet, weist zusätzlich zum Verdichtereinlasskanal, in welchem das Verdichterrad drehbar gelagert ist, einen Zusatzkanal auf, der in Höhe des Verdichterrades in den Verdichtereinlasskanal einmündet. Des Weiteren ist ein Stellglied zur Regulierung der Gaszufuhr in den Verdichtereinlasskanal sowie in den Zusatzkanal angeordnet. Je nach Anforderung kann das Stellglied in der Weise eingestellt werden, dass entweder das zuzuführende Gas über den Verdichtereinlasskanal oder über den Zusatzkanal strömt, wobei in letzterem Fall aufgrund der radialen Einmündung des Zusatzkanals in den Verdichtereinlasskanal das Gas beim Auftreffen dem Verdichterrad einen antreibenden Drall versetzt. Bei einem Druckabfall über dem Verdichter kann dieses zum Antreiben des Verdichterrades ausgenutzt werden.

Des Weiteren ist der Verdichter mit einem Elektromotor ausgestattet, welcher das Verdichterrad antreibt. Außerdem ist das Verdichterrad mit einer Schwungmasse gekoppelt. Diese Ausführung ermöglicht es dem Verdichter, in Phasen ohne Anforderung an die Verdichterleistung Rotationsenergie zu speichern, welche in Phasen mit Anforderungen an die abzugebende Verdichterleistung wieder freigesetzt werden kann. In der Ruhephase des Verdichters könnte zur Verlustreduktion gegebenenfalls auch eine Abkopplung von der Schwungmasse vorgesehen werden. Der Elektromotor dient hierbei zur Stabilisierung der Drehzahl auf einem gewünschten Drehzahlniveau. Da die Rotationsenergie jedoch primär aus dem Druckgefälle über dem Verdichter gespeist wird, genügt ein klein dimensionierter Elektromotor mit geringer Leistungsaufnahme für die Aufrechterhaltung der gewünschten Verdichterraddrehzahl. Dies unterscheidet den erfindungsgemäßen Verdichter von Ausführungen, welche aus dem Stand der Technik bekannt sind, da bei Letzteren üblicherweise verhältnismäßig groß dimensionierte Elektromotoren eingesetzt werden müssen, um im Falle einer Leistungsanforderung an den Verdichter kurzfristig Verdichterarbeit freisetzen zu können.

Beim erfindungsgemäßen Verdichter wird in den Phasen ohne Anforderung an die Verdichterleistung die Rotationsenergie in der Schwungmasse gespeichert, die auch kurzfristig wieder freigesetzt werden kann. Die Schwungmasse wird man aufgrund angestrebter geringer Lüftreibungsverluste weitgehend evakuieren. Sobald eine Anforderung an freizusetzende Verdichterarbeit vorliegt, kann der Strömungszufluss durch den Verdichtereinlasskanal freigegeben werden, woraufhin das zugeführte Gas von dem rotierenden Verdichterrad auf den gewünschten, erhöhten Ladedruck verdichtet wird.

Der Elektromotor ist vorteilhaft auf der Verdichterrad-Rückseite angeordnet, insbesondere in einem Pufferraum, welcher zwischen dem Verdichtergehäuse und einem Lagergehäuse liegt, in dem die Verdichterradwelle in Öl geschmierten Dichtstellen drehbar gelagert ist. Diesem Pufferraum kommt die Bedeutung eines Entkopplungsvolumens zwischen Lagergehäuse und Verdichterrad zu, was zu einer wirksamen Ölabdichtung führt. Die Druckverhältnisse im Bereich des Verdichterrades werden im Pufferraum auf Atmosphärendruck neutralisiert, so dass auch für den Fall eines stromab des Verdichterrades herrschenden Unterdruckes kein Saugdruck übertragen und kein Öl aus den Dichtstellen der Welle des Verdichters angesaugt wird. In diesem Pufferraum kann der Elektromotor mit geringem konstruktiven Aufwand und ohne die Notwendigkeit eines zusätzlichen Bauraumes angeordnet werden. Zudem kann der auf der Verdichterradwelle aufsitzende Rotor des Elektromotors in der Weise strukturiert werden, dass die Ausbildung eines Fliehkraftfeldes, welches eine unerwünschte Saugwirkung erzeugen könnte, an der Dichtstelle auf der dem Verdichterrad abgewandten Seite vermieden wird, gegebenenfalls sogar mithilfe eines Druckanstieges überkompensiert wird.

Die Schwungmasse ist bevorzugt auf der Verdichterradwelle angeordnet, insbesondere benachbart zur Rückseite des Verdichterrades. Der Elektromotor und die Schwungmasse können auf der gleichen Seite des Verdichterrades, vorteilhaft auf der Verdichterrad-Rückseite angeordnet sein, wobei in einer zweckmäßige Ausführung der Elektromotor - wie bereits dargestellt - in dem als Entlastungsvolumen fungierenden Pufferraum unmittelbar benachbart zur Rückseite des Verdichterrades angeordnet ist und die Schwungmasse auf der gleichen Seite auf der Verdichterradwelle aufsitzt, jedoch mit größerem Abstand zur Rückseite des Verdichterrades.

Die erfindungsgemäße Brennkraftmaschine ist mit einem Verdichter der vorbeschriebenen Art ausgestattet, der im Leerlauf bzw. im unteren Teillastbereich der Brennkraftmaschine unter Ausnutzung des unmittelbar am Zylindereingang herrschenden Unterdruckes als Kaltluft-Turbine betrieben wird; hierbei wird die Verbrennungsluft zum Antreiben des Verdichterrades über den Zusatzkanal geleitet und die Rotationsenergie in der Schwungmasse gespeichert. Mit steigender Last und Drehzahl und einer damit einhergehenden Ladedruckanforderung oberhalb des Atmosphärendruckes muss der Verdichter Kompressionsarbeit leisten, wofür der Strömungsweg für die Verbrennungsluft vom Zusatzkanal auf den Verdichtereinlasskanal umgeschaltet wird, so dass der Verdichter nun in der Lage ist, Verdichterarbeit zu leisten, die von der Rotationsenergie der Schwungmasse gespeist wird.

Zweckmäßig wird ein derartiger Verdichter in einer Brennkraftmaschine mit einem Abgasturbolader kombiniert, bei dem ein Turboverdichter im Ansaugtrakt der Brennkraftmaschine und eine Abgasturbine im Abgasstrang angeordnet sind. Der Turboverdichter des Abgasturboladers sowie der mit Schwungmasse und Elektromotor ausgestattete Verdichter sind in Reihe geschaltet, insbesondere derart, dass der Verdichter mit Elektromotor und Schwungmasse stromab des Turboverdichters und unmittelbar den Zylindereingängen vorgelagert angeordnet ist. In dieser Konfiguration kommt dem Verdichter mit Schwungmasse und Elektromotor eine sogenannte Boost-Funktion zu, welche zur kurzzeitigen Leistungsanhebung ausgenutzt wird. Diese Boost-Funktion wird vorteilhaft zur Überbrückung eines sogenannten Turboloches des Abgasturboladers eingesetzt, welches dadurch entsteht, dass bei verhältnismäßig niedrigen Drehzahlen der Brennkraftmaschine noch nicht ausreichend Abgas für den Antrieb des Abgasturboladers zur Verfügung steht. Dem Verdichter hat somit die Funktion einer kurzzeitigen Beschleunigungshilfe.

Der Verdichter mit Elektromotor und Schwungmasse ist zweckmäßig als Einzelverdichter ausgeführt, dessen Antriebsquelle der erwähnte Elektromotor sowie der Druckabfall im Ansaugtrakt im Leerlauf bzw. unteren Teillastbereich der Brennkraftmaschine sind. Der Verdichter kann aber auch Teil eines Abgasturboladers sein, wobei in diesem Fall der Elektromotor für eine Drehzahlstabilisierung des Laders im Betriebsbereich in der Brennkraftmaschine sorgt, in welchen kein ausreichend hoher Abgasgegendruck für die Aufrechterhaltung der vorteilhaften Mindestdrehzahl des Laders erzeugt wird.

Zweckmäßig ist ein das Verdichterrad des Verdichters überbrückender Bypass mit einem einstellbaren Sperrorgan vorgesehen, wobei der Bypass üblicherweise bei hohen Lasten und Drehzahlen der Brennkraftmaschine zur Umgehung des zusätzlichen Verdichters geöffnet und in den unteren und mittleren Teillastbereichen geschlossen wird. Bei geschlossenem Bypass wird die Verbrennungsluft durch den zusätzlichen Verdichter geleitet, wobei je nach Strömungsweg entweder ein Kaltluftturbinenbetrieb (Strömung durch den Zusatzkanal) eingestellt oder ein Ladedruck erzeugt wird (Strömung durch den Verdichtereinlasskanal). Bei hohen Lasten dagegen hat der vorgeschaltete Abgasturbolader seine volle Leistungsfähigkeit erreicht und wird der erforderliche, hohe Ladedruck über den Turboverdichter des Abgasturboladers erzeugt; der zusätzliche Verdichter kann in diesen Betriebsbereichen keinen Beitrag mehr zur Ladedruckerzeugung leisten und würde nur eine unerwünschte Drosselung erwirken, was durch die Öffnung des Bypass vermieden werden kann.

Weitere Vorteile und zweckmäßige Ausführungen sind den weiteren Ansprüchen, der Figurenbeschreibung und den Zeichnungen zu entnahmen. Es zeigen:
- Fig. 1: eine schematische Darstellung einer Brennkraftma- schine mit Abgasturbolader und zusätzlichem Ver- dichter, der mit einem Elektromotor und einer Schwungmasse ausgestattet ist,
- Fig. 2: einen Schnitt durch den zusätzlichen Verdichter,
- Fig. 3: eine Ausschnittvergrößerung aus Fig. 2 aus dem Be- reich des auf der Verdichterradwelle aufsitzenden Elektromotors.

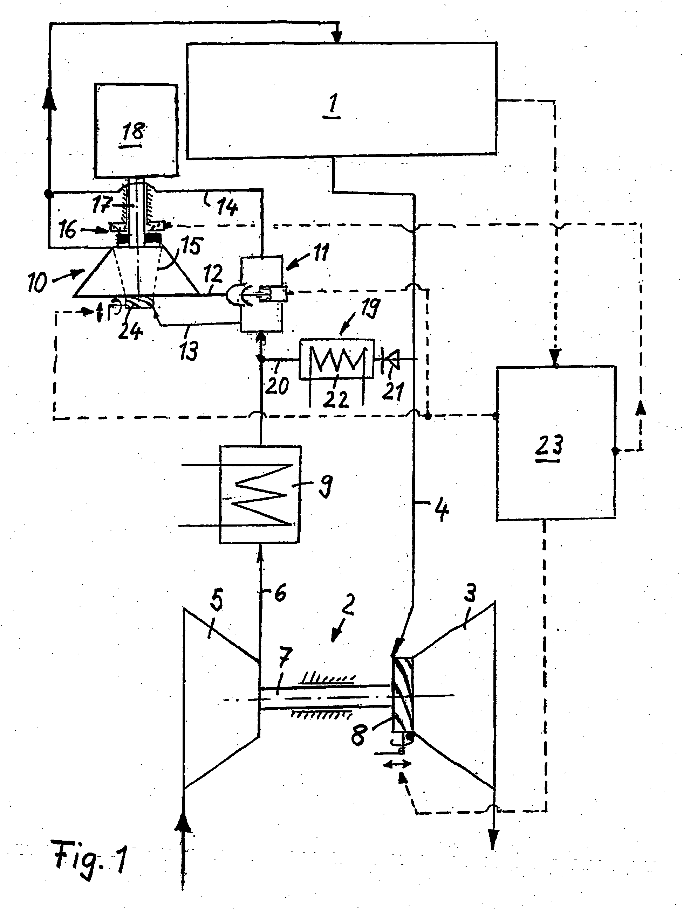

Die in Fig. 1 dargestellte Brennkraftmaschine 1 - ein Ottomotor oder ein Dieselmotor - ist mit einem Abgasturbolader 2 ausgestattet, welcher eine Abgasturbine 3 im Abgasstrang 4 und einen Turboverdichter 5 im Ansaugtrakt 6 der Brennkraftmaschine umfasst, wobei das Verdichterrad des Turboverdichters 5 über eine Welle 7 drehfest mit dem Turbinenrad der Abgasturbine 3 gekoppelt ist. Das Turbinenrad der Abgasturbine 3 wird von den unter Druck stehenden Abgasen der Brennkraftmaschine 1 angetrieben, wobei die Drehbewegung über die Welle 7 auf das Verdichterrad im Turboverdichter 5 übertragen wird, welcher daraufhin Verbrennungsluft aus der Umgebung unter Atmosphärendruck ansaugt und auf einen erhöhten Ladedruck verdichtet. Die Abgasturbine 3 ist mit einer variablen Turbinengeometrie 8 ausgestattet, über die der wirksame Turbineneintrittsquerschnitt zwischen einer minimalen Staustellung und einer maximal freigebenden Öffnungsstellung zu verstellen ist.

Stromab des Turboverdichters 5 wird die Verbrennungsluft in einem Ladeluftkühler 9 gekühlt und anschließend im weiteren Verlauf des Ansaugtraktes 6 einem zusätzlichen Verdichter 10 zugeführt, welcher als Einzelverdichter ausgeführt ist und zur kurzzeitigen Ladedruckerhöhung vorgesehen ist. Der Einzelverdichter 10 ist motornah angeordnet, so dass grundsätzlich auf eine Drosselklappe im Ansaugtrakt verzichtet werden kann.

Dem Einzelverdichter 10 ist ein Sperrorgan 11 zugeordnet, über das die Luftzufuhr in den Verdichtereinlasskanal 12, in einen parallel zum Verdichtereinlasskanal verlaufenden Zusatzkanal 13 und in einen das Verdichterrad 15 des Einzelverdichters überbrückenden Bypass 14 einzustellen ist. Im Verdichtereinlasskanal 12 ist das auf einer Verdichterradwelle 17 aufsitzende Verdichterrad 15 drehbar gelagert. Die Verbrennungsluft wird in Betriebsphasen über den Verdichtereinlasskanal zugeführt, in denen der Einzelverdichter 10 Ladedruck erzeugen soll. Der Zusatzkanal 13 verläuft parallel zum Verdichtereinlasskanal 12 und mündet in Höhe des Verdichterrades 15 radial in den Verdichtereinlasskanal 12 ein, wobei im Mündungsquerschnitt ein verstellbares Drallgitter 24 angeordnet ist, welches der zuströmenden Verbrennungsluft einen zusätzlichen Drall versetzt, unter dem die Verbrennungsluft auf das Verdichterrad 15 auftrifft. Der Weg über den Zusatzkanal 13 wird insbesondere im Leerlaufbetrieb und im niederen Teillastbetrieb der Brennkraftmaschine 1 freigegeben, da in diesen Betriebsbereichen am Zylindereingang der Brennkraftmaschine ein Unterdruck herrscht, wodurch sich über dem Verdichter 10 ein Druckabfall einstellt, welcher für einen Antrieb des Verdichterrades 15 ausgenutzt werden kann (Kaltluft-Turbineribetrieb).

Der Strömungsweg über den Bypass 14 kann bei hohen Lasten und Drehzahlen der Brennkraftmaschine 1 gewählt werden, da in diesen Betriebszuständen der Weg über den Einzelverdichter 10 lediglich eine Drosselung der zuzuführenden Verbrennungsluft zu Folge hätte, was aber nicht erwünscht ist. Der benötigte Ladedruck wird im oberen Last- und Drehzahlbereich über den Turboverdichter 5 des Abgasturboladers 2 bereitgestellt.

Der Einzelverdichter 10 ist mit einem antreibenden Elektromotor 16 ausgestattet, dessen Rotor drehfest auf der Verdichterradwelle 17 des Verdichterrades 15 sitzt und dessen Stator am Verdichtergehäuse angeordnet ist. Des Weiteren ist drehfest mit der Verdichterradwelle 17 eine Schwungmasse 18 gekoppelt, welche zur Speicherung von Rotationsenergie dient. Der Elektromotor 16 ist unmittelbar benachbart zur Verdichterrad-Rückseite angeordnet, auch die Schwungmasse 18 ist der Verdichterrad-Rückseite zugewandt, liegt jedoch mit größerem Abstand zu dieser als der Elektromotor 16.

Im Kaltluft-Turbinenbetrieb, in welchem über den Zusatzkanal 13 Verbrennungsluft dem Verdichterrad 15 zuzuführen ist und dieses angetrieben wird, wird Rotationsenergie in der Schwungmasse 18 gespeichert. Über einen zusätzlichen Antrieb über den Elektromotor 16 kann ein Mindest-Drehzahlniveau des Verdichterrades sichergestellt werden.

Bei einer Beschleunigung aus der Leerlaufdrehzahl heraus wird das Sperrorgan 11 umgeschaltet, so dass die Verbrennungsluft über den Verdichtereinlasskanal 12 zugeführte wird. Der Einzelverdichter 10 wird nun in der Verdichterbetriebsweise gefahren, die zugeführte Verbrennungsluft wird auf einen erhöhten Ladedruck verdichtet. Diese Betriebsweise hilft, ein sogenanntes Turboloch des Abgasturboladers 2 bei niedrigen Lasten und Drehzahlen zu überbrücken. Die Verdichterarbeit wird hierbei von der in der Schwungmasse 18 gespeicherten Rotationsenergie zur Verfügung gestellt.

Weiterhin ist die Brennkraftmaschine 1 mit einer Abgasrückführeinrichtung 19 ausgestattet, welche eine Rückführleitung 20 zwischen dem Abgasstrang 4 stromauf der Abgasturbine 3 und dem Ansaugtrakt 6 stromab des Ladeluftkühlers 9 umfasst, wobei in der Rückführleitung 20 ein einstellbares Sperrventil 21 und ein dem Sperrventil nachgeschalteter Abgaskühler 22 angeordnet sind.

Über eine Regel- und Steuereinheit 23 können die einstellbaren Aggregate der Brennkraftmaschine in Abhängigkeit von Zustands- und Betriebsgrößen.eingestellt werden. Bei den einstellbaren Aggregaten handelt es sich insbesondere um die variable Turbinengeometrie 8 der Abgasturbine 3, das Sperrorgan 11 des Einzelverdichters 10, das Drallgitter 24 im Einzelnerdichter 10 und das Sperrventil 21 der Abgasrückführeinrichtung 19.

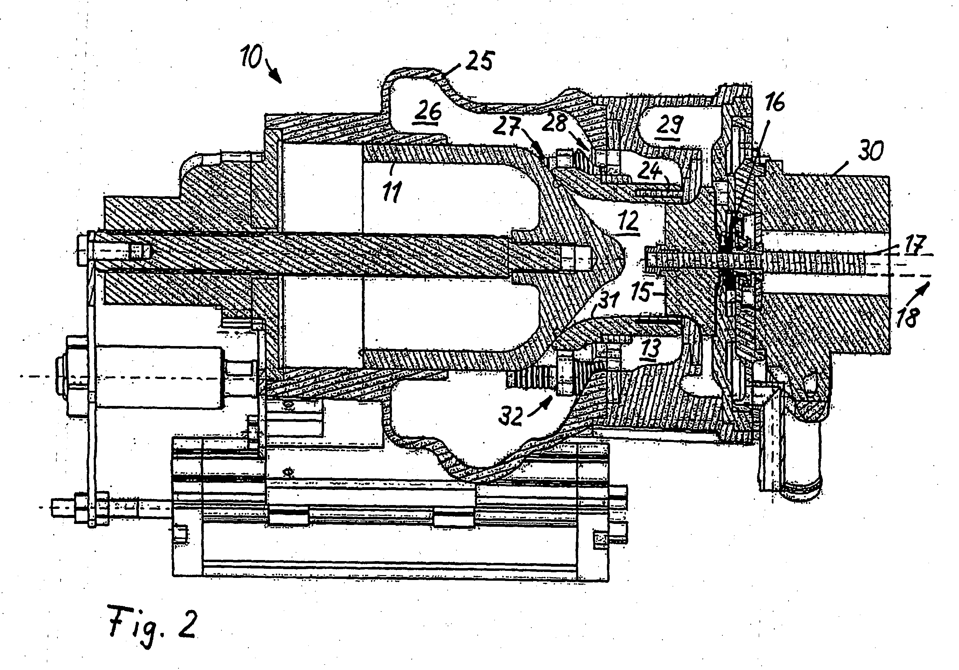

In Fig. 2 ist der Einzelverdichter 10 im Schnitt dargestellt. Im Verdichterbetrieb wird dem Verdichterrad 15 Verbrennungsluft über den Verdichtereinlasskanal 12 zugeführt, in welchem das Verdichterrad 15 drehbar um seine Verdichterradwelle 17 gelagert ist. Dem Verdichtereinlasskanal 12 wird Verbrennungsluft über einen vorgelagerten Luftsammelraum 26 zugeführt, der über eine Überströmöffnung 27 mit dem Verdichtereinlasskanal 12 kommuniziert. Im Ausführungsbeispiel ist die Überströmöffnung 27 von dem axial verstellbaren Sperrorgan 11 verschlossen, welches sich in einer den Verdichtereinlasskanal 12 abriegelnden Sperrposition findet.

Der Luftsammelraum 26 ist außerdem über eine weitere Überströmöffnung 28 mit dem Zusatzkanal 13 verbunden, welcher parallel zum Verdichtereinlasskanal 12 verläuft und diesen radial umgreift. Der Zusatzkanal 13 mündet radial in Höhe des Verdichterrades 15 in den Verdichtereinlasskanal 12. Im Ausführungsbeispiel nach Fig. 12 ist der Mündungsquerschnitt von einem axial verschieblichen Stellglied, das als Axialschieber 31 ausgeführt ist, verschlossen. Der Axialschieber 31 wird von einer Federeinrichtung 32, die an dem Verdichtergehäuse 25 abgestützt ist, in Richtung seiner den Mündungsquerschnitt des Zusatzkanals 13 in den Verdichtereinlasskanal 12 freigebenden Öffnungsstellung beaufschlagt, ist jedoch im Ausführungsbeispiel von dem Sperrorgan 11 gegen die Kraft der Federeinrichtung 32 in seine den Mündungsquerschnitt abriegelnde Schließposition verstellt. In Öffnungsstellung des Axialschiebers 31 ist der Mündungsquerschnitt des Zusatzkanals 13 in den Verdichtereinlasskanal 12 geöffnet, wobei im Mündungsquerschnitt das Drallgitter 24 angeordnet ist, welches dazu dient, der zuströmenden Verbrennungsluft einen Drall aufzuprägen, unter dem die Verbrennungsluft auf die Verdichterradschaufeln auftrifft.

Die das Verdichterrad 15 passierende Verbrennungsluft wird radial über einen Diffusor in einen Auslasskanal 29 geleitet, über den die Verbrennungsluft im weiteren Verlauf in den Ansaugtrakt eingeleitet wird.

Die Verdichterradwelle 17 ist in einem Lagergehäuse 30 drehbar gelagert, welches fest mit dem Verdichtergehäuse 25 verbunden ist. Zwischen dem Lagergehäuse 30 und der Rückseite des Verdichterrades 15 ist ein ringförmiger Pufferraum gebildet, in welchem Atmosphärendruck herrscht und der die Aufgabe hat, eine Druckentkopplung und eine aerodynamische Entkopplung zu bewirken, so dass Druckunterschiede zwischen ölgeschmierten Dichtstellen der Verdichterradwelle und der Reinluftseite des Verdichterrades nicht zu einem Übertritt von Schmieröl aus dem Lagergehäuse in den Verdichterradbereich führen können. Außerdem ist in dem Pufferraum der Elektromotor 16 aufgenommen.

Im Bereich der strichliert eingezeichneten Verlängerung der Verdichterradwelle 17 ist die Schwungmasse 18 angeordnet, die drehfest mit der Verdichterradwelle verbunden ist.

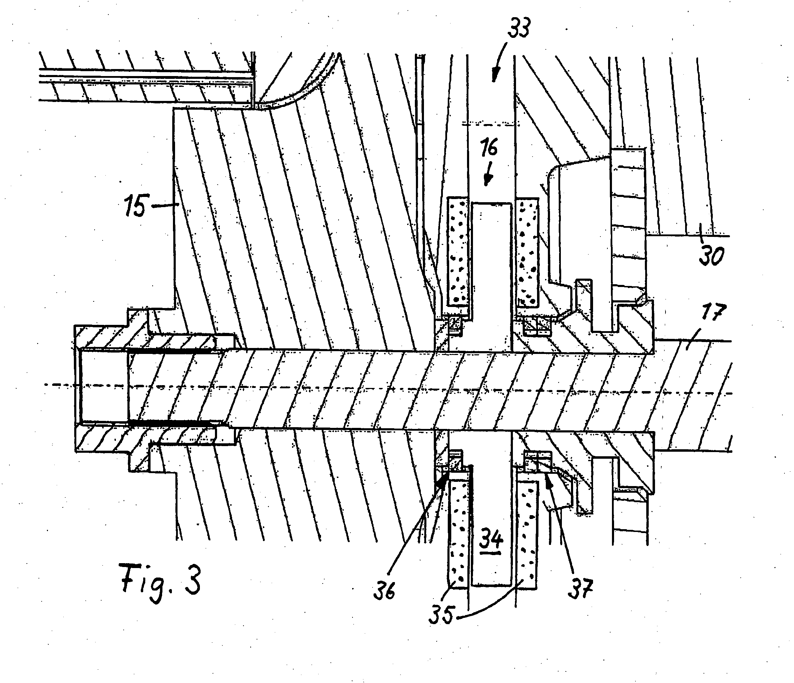

Wie der Ausschnittvergrößerung der Fig. 3 zu entnehmen, ist in dem ringförmigen Pufferraum 3 der Elektromotor 16 angeordnet, dessen ringförmiger Rotor 34 drehfest mit der Verdichterradwelle 17 verbunden ist und dessen Stator 35 am Verdichtergehäuse gehalten ist und beide Stirnseiten des Rotors 34 einfasst. Der Pufferraum 33 einschließlich des darin aufgenommenen Elektromotors 16 liegt axial zwischen dem Lagergehäuse 30 und der Rückwand des Verdichterrades 15.

Eingetragen sind in Fig. 3 auch Dichtstellen 36 und 37, welche den Pufferraum 33 begrenzen. Die Dichtstelle 36 markiert eine Abdichtstelle des Verdichterrades 15 gegenüber dem Pufferraum 33, dessen axiale Stirnseite von der Rückwand des Verdichterrades gebildet wird. Die Dichtstellen 36 und 37 verhindern, dass Öl in den Reinluftbereich des Verdichterrades gelangt.

Zur Lagerung der Verdichterradwelle kann eine Magnetlagerung eingesetzt werden, wodurch Verlustleistungen äußerst gering gehalten werden können. Da der Verdichter als Einzelverdichter ausgelegt ist, sind keine die Magnetlagerung beeinträchtigenden Bedingungen vorhanden, die beispielsweise im Falle eines Abgasturboladers aufgrund der Wärmeentwicklung auf der Turbinenseite vorherrschen. Eine Magnetlagerung weist außerdem den Vorteil auf, dass auf eine Ölschmierung verzichtet werden kann.

## Patentansprüche

1. Brennkraftmaschine, mit einem Verdichter (10) mit einem in einem Verdichtereinlasskanal (12) drehbar gelagerten Verdichterrad (15), mit einem Zusatzkanal (13), der in Höhe des Verdichterrades (15) in den Verdichtereinlasskanal (12) einmündet, und mit einem Stellglied zur Regulierung der Gaszufuhr in den Verdichtereinlasskanal (12) und in den Zusatzkanal (13), wobei das Verdichterrad (15) von einem Elektromotor (16) antreibbar ist,
**dadurch gekennzeichnet, dass**
der Verdichter (10) als Einzelverdichter ausgeführt ist, dessen Antriebsquelle der Elektromotor (16) sowie ein Druckabfall im Ansaugtrakt (6) der Brennkraftmaschine (1) ist, und dass das Verdichterrad (15) mit einer Schwungmasse (18) gekoppelt ist.

2. Brennkraftmaschine nach Anspruch 1,
**dadurch gekennzeichnet, dass**
der Elektromotor (16) als Niederleistungsmotor mit einer Leistung von maximal 200 W ausgelegt ist.

3. Brennkraftmaschine nach Anspruch 1 oder 2,
**dadurch gekennzeichnet, dass**
der Elektromotor (16) auf der Verdichterrad-Rückseite angeordnet ist.

4. Brennkraftmaschine nach einem der Ansprüche 1 bis 3,
**dadurch gekennzeichnet, dass**
der Rotor (34) des Elektromotors (16) auf einer das Verdichterrad (15) tragenden Verdichterradwelle (17) angeordnet ist.

5. Brennkraftmaschine nach einem der Ansprüche 1 bis 4,
**dadurch gekennzeichnet, dass**
die Verdichterradwelle (17) in einem Lagergehäuse (30) in ölgeschmierten Dichtstellen (36, 37) drehbar gelagert und benachbart zur Rückseite des Verdichterrades (15) ein Pufferraum zwischen Verdichtergehäuse (25) und Lagergehäuse (30) vorgesehen ist, der über Dichtstellen (36, 37) gegenüber dem Verdichtergehäuse (25) und dem Lagergehäuse (30) abgedichtet ist, wobei der Elektromotor (16) im Pufferraum (33) angeordnet ist.

6. Brennkraftmaschine nach einem der Ansprüche 1 bis 5,
**dadurch gekennzeichnet, dass**
die Schwungmasse (18) auf der Verdichterradwelle (17) benachbart zur Rückseite des Verdichterrades (15) angeordnet ist.

7. Brennkraftmaschine nach einem der Ansprüche 1 bis 6,
**dadurch gekennzeichnet, dass**
im Mündungsbereich des Zusatzkanals (13) in den Verdichtereinlasskanal (12) ein verstellbares Drallgitter (24) angeordnet ist.

8. Brennkraftmaschine nach einem der Ansprüche 1 bis 7,
**dadurch gekennzeichnet, dass**
ein das Verdichterrad (15) überbrückender Bypass (14) mit einem einstellbaren Sperrorgan (11) vorgesehen ist.

9. Brennkraftmaschine nach einem der Ansprüche 1 bis 8,
**dadurch gekennzeichnet, dass**
ein Abgasturbolader (2) mit einer Abgasturbine (3) im Abgasstrang (4) und einem zusätzlichen Turboverdichter (5) im Ansaugtrakt (6) angeordnet ist, wobei der Turboverdichter (5) stromauf des Verdichters (10) angeordnet ist.

10. Brennkraftmaschine nach Anspruch 9,
**dadurch gekennzeichnet, dass**
die Abgasturbine (3) mit variabler Turbinengeometrie (8) zur Einstellung des wirksamen Turbineneintrittsquerschnitts ausgestattet ist.

11. Verfahren zum Betrieb einer Brennkraftmaschine (1), mit einem Abgasturbolader (2) mit einem Turboverdichter (5) und einer Abgasturbine (3), mit einem zusätzlichen, stromab des Turboverdichters (5) angeordneten Verdichter (10), dessen Verdichterrad (15) von einem Elektromotor (16) antreibbar und mit einer Schwungmasse (18) gekoppelt ist, wobei das Verdichterrad (15) des zusätzlichen Verdichters (10) von einem Bypass (14) mit einem einstellbaren Sperrorgan (11) zu überbrücken ist,
**gekennzeichnet durch** folgende Verfahrensschritte:
- im niederen Teillastbetrieb wird dem Verdichterrad (15) zur Realisierung eines Kaltluft-Turbinenbetriebs Verbrennungsluft über den Zusatzkanal (13) zugeführt und die Verdichterdrehzahl **durch** Betätigung des Elektromotors (16) reguliert,
- bei Beschleunigung des Motors wird dem Verdichterrad (15) Verbrennungsluft über den Verdichtereinlasskanal (12) zugeführt,
- im Vollastbereich wird der Bypass (14) zur Umgehung des Verdichterrades (15) geöffnet.

## Claims

1. Internal combustion engine comprising a compressor (10) with a compressor impeller (15) rotatably mounted in a compressor inlet duct (12), an auxiliary duct (13) terminating into the compressor inlet duct (12) at the level of the compressor impelled (15) and a control element for controlling the gas supply into the compressor inlet duct (12) and into the auxiliary duct (13), wherein the compressor impeller (15) can be driven by an electric motor (16),
**characterised in that**
the compressor (10) is designed as a single compressor, the drive sources of which are the electric motor (16) and a pressure drop in the intake train (6) of the internal combustion engine (1), and **in that** the compressor impeller (15) is coupled to an inertia mass (18).

2. Internal combustion engine according to claim 1,
**characterised in that**
the electric motor (16) is designed as a low-power motor with a maximum power of 200 W.

3. Internal combustion engine according to claim 1 or 2
**characterised in that**
the electric motor (16) is mounted on the rear of the compressor impeller,

4. Internal combustion engine according to any of claims 1 to 3,
**characterised in that**
the rotor (34) of the electric motor (16) is mounted on an impeller shaft (17) supporting the compressor impeller (15).

5. Internal combustion engine according to any of claims 1 to 4,
**characterised in that**
the impeller shaft (17) is rotatably mounted in a bearing housing (30) in oil-lubricated sealing locations (36, 37), and **in that**, adjacent to the rear of the compressor impeller (15), a buffer space is provided between the compressor housing (25) and the bearing housing (30), which is sealed against the compressor hosing (25) and the bearing housing (30) by way of sealing locations (36, 37), the electric motor (13) being located in the buffer space (33).

6. Internal combustion engine according to any of claim 1 to 5,
**characterised in that**
the inertia mass (18) is located on the impelled shaft (17) adjacent to the rear of the compressor impeller (15).

7. Internal combustion engine according to any of claims 1 to 6,
**characterised in that**
an adjustable swirl grid (24) is provided in the region where the auxiliary duct (13) terminates into the compressor inlet duct (12).

8. Internal combustion engine according to any of claims 1 to 7,
**characterised in that**
a bypass (14) with an adjustable locking element (11) is provided to bridge the compressor impeller (15).

9. Internal combustion engine according to any of claims 1 to 8,
**characterised in that**
a turbocharger (2) with an exhaust gas turbine (3) is provided in the exhaust train (4) and an additional turbocompressor (5) is provided in the intake train (6), the turbocompressor (5) being located upstream of the compressor (10).

10. Internal combustion engine according to claim 9,
**characterized in that**
the exhaust gas turbine (3) has a variable turbine geometry for the adjustment of the effective turbine inlet cross-section.

11. Method for the operation of an internal combustion engine (1) comprising a turbocharger (2) with a turbocompressor (5) and an exhaust gas turbine (3) as well as an additional compressor (10) located downstream of the turbocompressor (5), wherein the compressor impeller (15) can be driven by an electric motor (16) and is coupled to an inertia mass (18) and wherein the compressor impeller (15) of the additional compressor (10) can be bridged by a bypass (14) with an adjustable locking element (11),
**characterised by** the following steps.
- in low-power part-load operation, the compressor impeller (15) is supplied with combustion air via the auxiliary duct (13) for a cold-air turbine operation, and the compressor speed is controlled by actuating the electric motor (16),
- as the motor accelerates, the compressor impeller (15) is supplied with combustion air via the compressor inlet duct (12),
in full-load operation, the bypass (14) is opened to bypass the compressor impeller (15).

## Revendications

1. Moteur à combustion interne doté d'un compresseur (10) présentant une roue de compresseur (15) montée de manière à pouvoir tourner dans un canal d'admission de compresseur (12) et un canal supplémentaire (13) qui débouche à la hauteur de la roue de compresseur (15) dans le canal d'admission de compresseur (12), et avec un élément de positionnement pour réguler l'amenée de gaz dans le canal d'admission de compresseur (12) et dans le canal supplémentaire (13), la roue de compresseur (15) peut être entraînée par un moteur électrique (16), **caractérisé en ce que** le compresseur (10) est conçu comme un compresseur individuel dont la source d'entraînement est le moteur électrique (16) ainsi qu'une chute de pression dans la tubulure d'admission (6) du moteur à combustion interne (1) et **en ce que** la roue de compresseur (15) est couplée à une masse d'inertie.

2. Moteur à combustion interne selon la revendication 1, **caractérisé en ce que** le monteur électrique (16) est conçu comme un moteur de basse puissance dont la puissance est de 200 W maximum.

3. Moteur à combustion interne selon la revendication 1 ou 2, **caractérisé en ce que** le moteur électrique (16) est disposé sur la face arrière de la roue de compresseur.

4. Moteur à combustion interne selon l'une quelconque des revendications 1 à 3, **caractérisé en ce que** le rotor (34) du moteur électrique (16) est disposé sur un arbre de roue de compresseur (17) qui porte la roue de compresseur (15).

5. Moteur à combustion interne selon l'une quelconque des revendications 1 à 4, **caractérisé en ce que** l'arbre de roue de compresseur (17) est monté de manière à pouvoir tourner dans un logement de palier (30) à des points d'étanchéité lubrifiés (36, 37) et disposé à proximité la face arriéré de la roue dé compresseur (15), un compartiment tampon est prévu entré le carter de compresseur (25) et le logement de palier (30) qui est étanchéifié par les points d'étanchéité (36, 37) par rapport au carter de compresseur (26) et au logement de palier (30), le moteur électrique (16) étant disposé dans un compartiment tampon (33).

6. Moteur à combustion interne selon l'une quelconque des revendications 1 à 5, **caractérisé en ce que** la masse d'inertie (18) est disposée sur l'arbre de roue de compresseur (17) à proximité de la face arrière de la roue de compresseur (15),

7. Moteur à combustion interne selon l'une quelconque des revendications 1 à 6, **caractérisé en ce que** dans la zone d'embouchure du canal supplémentaire (13) dans le canal d'admission de compresseur (12) est disposée une grille à turbulence (24) réglable.

8. Moteur à combustion interne selon l'une quelconque des revendications 1 à 7, **caractérisé en ce qu'**est prévu un élément de dérivation (15) contournant la roue de compresseur (15) avec un organe d'arrêt (11) réglable.

9. Moteur à combustion interne selon l'une quelconque des revendication 1 à 8, **caractérisé en ce qu'**un turbocompresseurs à gaz d'échappement (2) avec une turbine à gaz (3) est disposé dans une voie de gaz d'échappement (4) et avec un turbocompresseur (5) supplémentaire dans une tubulure d'admission, le turbocompresseur (5) étant disposé en amont du compresseur (10).

10. Moteur à combustion interne selon la revendication 9, **caractérisé en ce que** la turbine à gaz d'échappement (3) est équipée d'une géométrie de turbine (8) variable pour régler de manière efficace la section transversale d'entrée de la turbine.

11. Procédé de fonctionnement d'un moteur à combustion interne (1) doté d'un turbocompresseur à gaz d'échappement (2) avec un turbocompresseur (5) et une turbine à gaz d'échappement (3) avec un compresseur (10) supplémentaire disposé en aval du turbocompresseur (5) dont la roue de compresseur (15) peut être entraînée par un moteur électrique (16) et est couplée à une masse d'inertie (18), la roue de compresseur (15) du compresseur (10) supplémentaire devant être contournée par un élément de dérivation (14) à l'aide d'un organe d'arrêt (11) réglable, **caractérisé par** les étapes de procédé suivantes :
- en mode de fonctionnement à charge partielle basse, de l'air de combustion est amené à la roue de compresseur (15) par un canal (13) supplémentaire pour faire fonctionner la turbine par air froid et la vitesse dé rotation du compresseur est régulée par l'actionnement du moteur électrique (16),
- lors de l'accélération du moteur, de l'air de combustion est amené à la roue de compresseur (15) par le canal d'admission de compresseur (12), dans la plage pleine charge l'élément de dérivation (14) est ouverte manière à contourner la roue de compresseur (15).
